# FASCICULE DE BREVET EUROPEEN

(11) **EP 0 744 865 B1**
(45) Date de publication et mention de la délivrance du brevet: **11.07.2001**
(21) Numéro de dépôt: 96400880.9
(22) Date de dépôt: 24.04.1996
(51) Int. Cl.: H04N 5/44, H04N 5/46

(54) **Procédé pour numériser un signal de fréquence intermédiaire FI, en particulier de télévision, et circuit pour la mise en oeuvre de ce procédé**
Verfahren zur Digitalisierung eines Signals mit Zwischenfrequenz, insbesondere ein Fernsehsignal, und Schaltung zur Durchführung des Verfahrens
Method for digitising a signal at intermediate frequency particularly a television signal, and circuit for implementing the same

(30) Priorité: 23.05.1995 FR 9506111
(43) Date de publication de la demande: 27.11.1996
(73) Titulaire: THOMSON multimedia, 92648 Boulogne Cédex (FR)
(72) Inventeur: Boie, Werner, 92050 Paris La Defense Cedex 60 (FR)
(74) Mandataire: Ruellan-Lemonnier, Brigitte

(56) Documents cités:
- EP-A- 0 062 872
- EP-A- 0 321 681
- EP-A- 0 442 578
- EP-A- 0 629 040
- US-A- 4 502 078

## Description

L'invention est relative à un procédé pour numériser un signal de fréquence intermédiaire FI ayant une largeur de bande qui peut varier d'un standard à l'autre, une des limites de cette bande correspondant à une valeur de fréquence sensiblement constante, l'autre limite de la bande correspondant à une valeur variable en fréquence en fonction du standard.

L'invention concerne plus particulièrement, mais non exclusivement, les signaux de fréquence intermédiaire FI de télévision.

Les techniques de traitement des signaux numériques permettent d'une manière générale d'accomplir de façon plus souple et plus économique les fonctions de traitement, filtrage et démodulation des signaux, que ne le permettent les composants analogiques. Ainsi les techniques de traitement des signaux numériques conduisent à des performances améliorées et sont illustrées, par example, dans le document EP-A-442 578.

En particulier, l'application de telles techniques aux récepteurs TV (télévision) modernes devrait permettre d'obtenir de nombreux avantages tels que réduction de la complexité des composants analogiques, possibilité de reconfigurer le récepteur TV, sans augmentation de matériel, à une variété de standards TV différents. On peut envisager d'aboutir à une solution avec un circuit "puce" qui conviendrait pour tous les standards du monde entier. D'autres avantages pourraient être cités, telle que la possibilité de réaliser un filtrage bien adapté au standard, la possibilité d'appliquer des algorithmes de correction en ligne, par exemple pour la commande automatique de gain (CAG) ou pour la commande automatique de fréquence (CAF).

Plusieurs exigences sont à prendre en considération pour qu'une présentation en numérique, (ou numérisation), des signaux analogiques FI soit satisfaisante. Tout d'abord il convient d'assurer une résolution dynamique minimale pour faire la différence entre le signal souhaité et les signaux des canaux adjacents au signal souhaité. Si l'on considère un signal de fréquence FI d'environ 40 MHz à présenter en numérique, il faut pratiquement une résolution dynamique minimale de 10 bits, correspondant à 1024 niveaux pour effectuer une discrimination suffisante. Dans la pratique, il peut arriver que les signaux des canaux adjacents aient des amplitudes très nettement supérieures, jusqu'à 50 ou 60 dB à l'amplitude du signal désiré, et dans un tel cas, il est souhaitable que la résolution dynamique soit supérieure à celle indiquée précédemment.

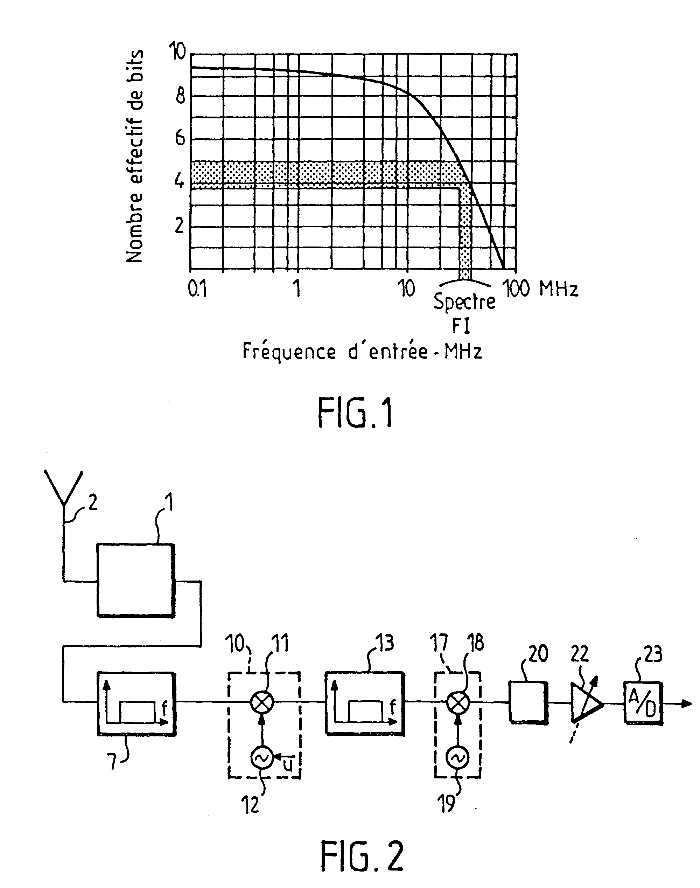

Une difficulté est liée à la fréquence relativement élevée du signal Fl ( de l'ordre de 40 MHz en télévision) et à la vitesse d'échantillonnage imposée par une telle fréquence. Actuellement, les convertisseurs analogiques / numériques (A/D) disponibles sur le marché, à un prix acceptable, ne permettent pas de satisfaire à ces exigences, comme expliqué avec référence à la figure 1 des dessins. Cette figure est un diagramme relatif à un convertisseur A/D du type convertisseur de flèche (FLASH CONVERTER) et fournit, en ordonnées, le nombre effectif de bits (utilisables) à la sortie du convertisseur en fonction de la fréquence du signal d'entrée, portée en abscisses suivant une échelle logarithmique. On voit qu'un tel convertisseur qui permet de disposer de 10 bits effectifs pour les faibles fréquences, ne fournira plus que 5 bits environ pour des fréquences de l'ordre de 40 MHz, ce qui est une résolution dynamique insuffisante pour le problème à traiter.

En outre, on souhaite que la solution proposée pour numériser les signaux en question convienne aux différents standards pour les appareils considérés ; notamment dans le cas de récepteurs TV on souhaite fournir une solution convenant aux différents standards TV existant dans le monde.

Cette exigence de solution multistandard est difficile à satisfaire car, si l'on envisage, pour une bonne résolution dynamique, de filtrer le signal souhaité en éliminant les signaux des canaux adjacents, selon les techniques de filtrage classiques, il faudra ou bien choisir plusieurs filtres adaptés aux fréquences des différents standards, ce qui est coûteux, ou bien accepter qu'un même filtre intervienne pour des signaux dont la fréquence ne correspond pas à celle pour laquelle le filtre est prévu, ce qui entraînera un moins bon filtrage et une diminution de la résolution dynamique.

On dispose actuellement de filtres, en particulier de filtres SAW (filtres à ondes de surface) convenant aux fréquences élevées (fréquences supérieures ou égales à la FI) mais qu'on ne sait pas adapter, tout au moins pour le moment, à des fréquences inférieures qui seraient acceptables pour un convertisseur A/D.

Pour résoudre les problèmes créés par ces exigences contradictoires, le procédé selon l' invention, pour numériser un signal de fréquence intermédiaire FI, en particulier de télévision, ayant une largeur de bande qui peut varier d'un standard à l'autre, alors qu'une des limites de cette bande est sensiblement constante en fréquence, est caractérisé par le fait qu'avant de convertir le signal analogique en signal numérique, on élimine les signaux des canaux adjacents à la bande du signal à traiter selon les étapes suivantes :
- dans une première étape, on élimine par filtrage les signaux des canaux adjacents à la limite sensiblement constante, en choisissant les caractéristiques du filtrage de manière telle que, quelle que soit la largeur de la bande du signal à traiter en fonction du standard, ce signal ne soit pas altéré par le filtrage du côté de sa limite variable en fréquence ;
- dans une seconde étape, on transpose en fréquence le signal à traiter, en fonction de sa largeur de bande, pour amener, dans le signal transposé, la limite variable de la bande du signal d'origine à une valeur sensiblement constante en fréquence,
et dans une troisième étape, on élimine par filtrage les signaux des canaux adjacents au signal transposé, en choisissant les caractéristiques du filtrage de manière telle que, quelle que soit la largeur de la bande du signal à traiter, celui-ci ne soit pas altéré.

Grâce au procédé de l'invention, on peut, avec des caractéristiques de filtrage établies pour des fréquences et largeurs de bande déterminées, traiter des signaux dont la largeur de bande va varier, selon les standards, sans avoir à modifier les filtres pour chaque standard. L'élimination des signaux ou des canaux adjacents à la bande du signal à traiter permet d'améliorer la résolution dynamique pour un même nombre de bits effectifs en sortie du convertisseur A/D.

Dans le cas d'un signal FI de télévision, la limite supérieure de la bande est sensiblement constante en fréquence et, dans la première étape, on élimine les signaux des canaux adjacents supérieurs au signal considéré, le filtrage lors de cette première étape étant adapté à la largeur maximale de bande pour le signal considéré, dans les différents standards possibles TV.

Avantageusement, pour réaliser ensuite la conversion en numérique du signal, on effectue, après les trois étapes mentionnées précédemment, une réduction de la fréquence du signal à traiter, avant son envoi sur l'entrée du convertisseur A/D.

L'invention est également relative à un circuit pour la mise en oeuvre du procédé défini précédemment, ce circuit ayant une entrée qui reçoit un signal provenant d'un dispositif d'accord sur une fréquence intermédiaire FI et étant caractérisé par le fait qu'il comprend :
- un premier filtre passe-bande dont une limite correspond en fréquence à la limite sensiblement constante de la bande du signal à traiter pour éliminer les signaux des canaux adjacents à cette limite du signal souhaité, ce filtre étant adapté à la largeur maximale de bande des différents standards, de manière à ne pas altérer le signal à traiter,quel que soit le standard;
- un circuit mélangeur pour transposer le signal FI filtré dans une autre gamme de fréquences, en tenant compte du standard de ce signal et de sa largeur de bande, et pour amener, dans le signal transposé, la limite variable du signal initial sur une valeur de fréquence sensiblement constante,
- et un deuxième filtre passe-bande dont une limite correspond, en fréquence, à la valeur de fréquence sensiblement constante du signal transposé, ce deuxième filtre étant adapté pour éliminer les signaux des canaux adjacents à la susdite valeur de fréquence constante du signal transposé, la largeur de la bande du filtre étant adaptée à la largeur maximale de bande des différents standards possibles.

Avantageusement les deux filtres sont constitués par des filtres SAW ( filtres à ondes de surface). La largeur de la bande passante de ces filtres est au moins égale à la largeur maximale de la bande des signaux FI des différents standards.

Le circuit mélangeur comprend, de préférence, un circuit multiplieur dont une entrée est reliée à la sortie du premier filtre et dont une autre entrée est reliée à la sortie d'un oscillateur local à fréquence fixe, réglable en fonction du standard TV ou autre. Avantageusement, le réglage de la fréquence fixe de l'oscillateur local est assuré à l'aide d'une tension électrique.

Un circuit réducteur de fréquence est prévu à la sortie du deuxième filtre, ce circuit réducteur comprenant un multiplieur dont une entrée est reliée à la sortie du deuxième filtre et un oscillateur local dont la sortie est reliée à une autre entrée du multiplieur ; cet oscillateur local peut avoir une fréquence réglable en fonction du standard du canal TV sélectionné correspondant au signal à traiter. Un filtre passe-bas et un circuit de commande automatique de gain sont avantageusement branchés entre la sortie du réducteur de fréquence et l'entrée du convertisseur A/D.

La réduction de fréquence est choisie de telle sorte que la numérisation assurée par le convertisseur A/D s'effectue avec une précision élevée.

L'invention consiste, mises à part les dispositions exposées ci-dessus, en un certain nombre d'autres dispositions dont il sera plus explicitement question ci-après à propos d'un exemple de réalisation décrit avec références aux dessins ci-annexés, mais qui n'est nullement limitatif.

La figure 1 de ces dessins, est un diagramme illustrant la variation de résolution dynamique d'un convertisseur A/D classique, en fonction de la fréquence portée en abscisses, tandis que le nombre effectif de bits en sortie du convertisseur est porté en ordonnées.

La figure 2 est un schéma d'un circuit selon l'invention, permettant la mise en oeuvre du procédé de l'invention.

Les figures 3A - 3E illustrent les différentes étapes du procédé permettant de sélectionner le signal FI souhaité.

Les figures 4A - 4D, enfin, sont des schémas illustrant la réduction de fréquence du signal FI souhaité.

En se reportant à la figure 2, on peut voir l'ensemble d'un circuit pour numériser un signal de fréquence intermédiaire FI, en télévision. Le circuit comprend un dispositif d'accord 1 (ou "tuner") classique dont l'entrée est reliée à une antenne 2 captant les signaux à traiter. Le dispositif d'accord 1 comporte un oscillateur local réglé sur une fréquence adaptée à celle des signaux captés par l'antenne 2 pour créer un battement et fournir en sortie du dispositif 1 un signal dont la fréquence correspond à la valeur normalisée de la fréquence intermédiaire FI, qui peut être d'environ 40 MHz dans le domaine de la télévision.

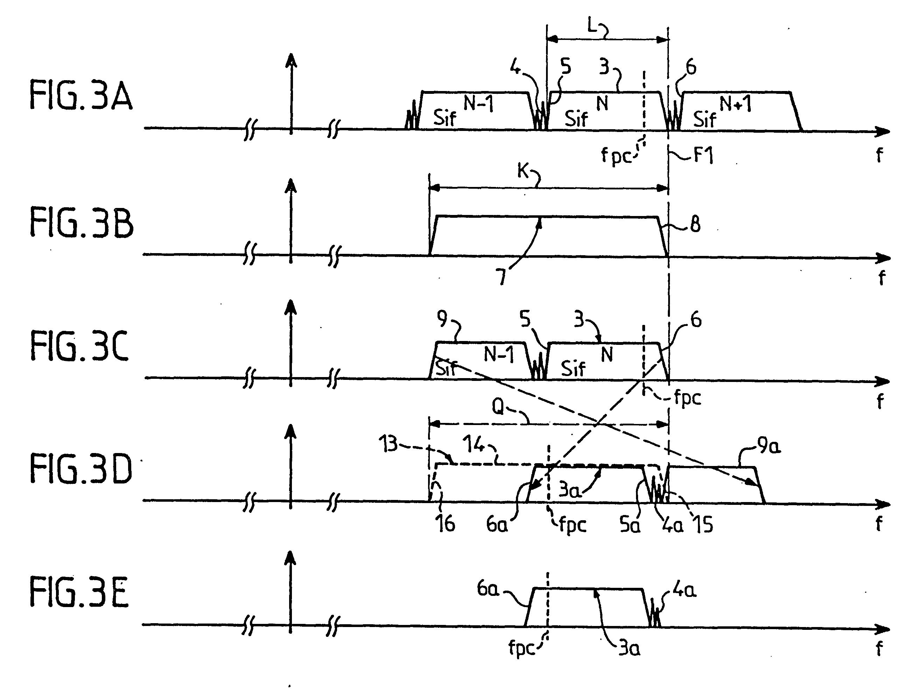

Comme visible sur la figure 3A le signal disponible sur la sortie du dispositif d'accord 1 comprend non seulement le signal S_{if}N souhaité, correspondant à un canal déterminé, mais aussi des signaux correspondant à des canaux adjacents au signal souhaité. Pour simplifier, on a seulement représenté sur la figure 3A un signal correspondant au canal adjacent supérieur S_{if}N+1 et un signal correspondant au canal adjacent inférieur S_{if}N-1. L'ensemble de ces trois signaux correspond à une largeur de bande supposée du premier signal FI pour l'exemple considéré.

On a en outre représenté par une ligne en tirets, parallèle à l'axe des ordonnées, la fréquence de la porteuse image fpc de part et d'autre de laquelle s'étend la bande du signal S_{if}N souhaité.

Le signal S_{if}N est représenté schématiquement par une bande trapézoïdale 3, correspondant à la bande video autour de la fréquence fpc de la porteuse image, et une bande son 4, plus étroite, située juste au-dessous de la limite inférieure 5 de la bande 3. La limite supérieure de la bande 3 est désignée par 6.

Il est à noter que les amplitudes des signaux des canaux adjacents S_{if}N+1 et S_{if}N-1 peuvent être très supérieures à celles du signal souhaité S_{if}N, ce qui nécessite des précautions de traitement comme exposé précédemment.

Il se trouve que la limite supérieure 6 de la bande 3 du signal S_{if}N souhaité est sensiblement constante en fréquence, d'un standard de télévision à l'autre. Par contre la largeur L de la bande 3 du signal souhaité S_{if}N varie sensiblement d'un standard TV à l'autre, de sorte que la limite inférieure 5 de la bande 3 du signal souhaité varie en fréquence selon le standard TV.

Un premier filtre passe-bande 7 est choisi avec une limite supérieure 8 correspondant en fréquence à la limite 6 sensiblement constante de la bande 3 du signal S_{if}N que l'on souhaite numériser.Les caractéristiques de la bande passante, sensiblement en forme de fenêtre rectangulaire, du filtre 7 sont illustrées par le schéma de la figure 3B. Le filtre 7 est adapté aux différents standards possibles, c'est-à-dire que le filtre 7 possède une bande passante de largeur K ( voir figure 3B) au moins égale à la largeur de bande maximale L des différents standards dans le monde, pour le canal correspondant au signal souhaité.

Dans ces conditions, les signaux S_{if}N+1 des canaux adjacents supérieurs à la limite 6 vont être éliminés par le filtre 7. En outre, quel que soit le standard TV, on est sûr que la totalité de la bande 3 du signal S_{if}N souhaité, sera transmise, sans être coupée par le filtre 7 puisque la largeur K de bande passante de ce dernier est égale ou supérieure à la largeur L maximale de bande des différents standards TV.

Toutefois, le signal fourni sur la sortie du filtre 7 se composera non seulement du signal souhaité S_{if}N mais également d'un signal correspondant au canal adjacent inférieur S_{if}N-1..., puisque la largeur K de bande du filtre 7 est, pour la plupart des standards, supérieure à la largeur L de la bande 3.

Le signal en sortie du filtre 7 est représenté sur la figure 3C ; il englobe le signal souhaité 3(S_{if}N) et une partie 9 du signal adjacent inférieur S_{if}N-1.

Le filtre 7 est avantageusement constitué par un filtre SAW ou filtre à ondes de surface, disponible dans le commerce, et fonctionnant parfaitement pour les fréquences intermédiaires FI de l'ordre de 40 MHz. De tels filtres SAW présentent un rapport qualité/prix élevé et constituent, actuellement, une solution particulièrement intéressante pour le filtrage. Toutefois, comme indiqué précédemment, de tels filtres SAW ne fonctionnent pas de manière satisfaisante pour des fréquences nettement inférieures aux fréqences FI.

En se reportant de nouveau à la figure 2, on voit que le signal de sortie du filtre 7 est envoyé à l'entrée d'un circuit mélangeur 10 propre à transposer le signal FI filtré, illustré sur la figure 3C, dans une autre gamme de fréquences, en tenant compte du standard du signal S_{if}N et de sa largeur de bande. Le circuit mélangeur 10 comprend un circuit multiplieur 11 recevant sur une entrée les signaux de sortie du filtre 7 et dont une autre entrée est attaquée par un oscillateur local 12 à fréquence fixe f_{Lo}. La fréquence de l'oscillateur 12 peut être modifiée grâce à une tension U appliquée à l'oscillateur 12, et permettant d'adapter la fréquence fixe fLo au standard TV concerné.

L'effet de transposition produit par le circuit mélangeur 9 est illustré par la transition de la figure 3C à la figure 3D . Cet effet comprend un décalage en fréquence avec un effet de miroir provoquant un retournement de la position des canaux comme illustré par les flèches en tirets allant de la figure 3C à la figure 3D.

Plus précisément, on voit que la fréquence fpc lorque l'on passe de la figure 3C à la figure 3D, c'est-à-dire lorsque l'on passe de l'entrée à la sortie du circuit 10, a été abaissée d'une valeur dépendant de la fréquence de l'oscillateur local 12. De plus la bande 3 du signal que l'on souhaite traiter a été retournée de 180° autour d' un axe parallèle aux ordonnées et est devenue 3a . La limite inférieure 5 de la bande 3 est devenue limite supérieure 5a de la bande 3a, et inversement pour la limite supérieure 6 devenue limite inférieure 6a.

Le signal 9 adjacent à la limite inférieure du signal à traiter sur la figure 3C est passé en 9a de l'autre côté du signal 3a transposé à traiter et est devenu adjacent à la limite supérieure 5a du signal transposé 3a illustré sur la figure 3D. Les paramètres du circuit mélangeur 10 sont choisis de telle sorte que la limite supérieure 5a, indiquée sur la figure 3D, de la bande du signal à traiter, corresponde à une fréquence sensiblement constante, quel que soit le standard . Cette fréquence peut être la même que la fréquence F1, correspondant à la limite supérieure du signal S_{if}N de la figure 3A, ou peut être différente.

Le signal global, représenté en trait plein sur la figure 3D, composé du signal à traiter et d'un signal adjacent supérieur à éliminer, est envoyé sur l'entrée d'un second filtre passe-bande 13, avantageusement également un filtre SAW.

La bande passante de ce second filtre SAW est schématisée par une fenêtre sensiblement rectangulaire 14, tracée en tirets sur la figure 3D. La limite supérieure 15 correspond à la valeur sensiblement constante de la limite supérieure 5a du signal à traiter transposé, compte-tenu éventuellement de la bande son 4a, de sorte que la limite 15 peut être légèrement supérieure à la limite 5a. Mais, de toutes façons, la limite 5a restant sensiblement constante, quel que soit le standard TV, il apparaît que le filtre 13, avec sa limite 15 également constante, pourra convenir quel que soit le standard TV.

La largeur Q de la bande passante du second filtre SAW est choisie pour que, quel que soit le standard TV, le signal à traiter ne soit pas altéré par le second filtre 13. Autrement dit, on choisit la largeur de bande Q pour que dans tous les cas, quel que soit le standard, la limite inférieure 16 de la bande passante 14 du second filtre 13 soit inférieure à la limite inférieure 6a du signal à traiter.

A la sortie du filtre 13, on obtient le signal à traiter, représenté sur la figure 3E, séparé des signaux des canaux adjacents qui se trouvaient présents sur la figure 3A. La forme du signal 3a obtenu sur la figure 3E est symétrique, par rapport à un axe parallèle à l'axe des ordonnées, du signal représenté sur la figure 3A, en raison de l'effet miroir déja expliqué.

Le signal FI sélectionné, représenté sur la figure 3E, permet une bonne résolution dynamique puisqu'il n'est plus encombré des signaux parasites des canaux adjacents. Un tel signal pourra être obtenu quel que soit le standard TV sans avoir à modifier les filtres 7 et 13, l'adaptation se faisant uniquement au niveau de l'oscillateur local 12, avec la tension U, pour régler l'effet de transposition correspondant au passage de la figure 3C à la figure 3D.

Toutefois, le signal obtenu à la sortie du filtre 13 est à une fréquence trop élevée pour pouvoir être numérisé correctement par les convertisseurs A/D disponibles, à prix acceptable, assurant une résolution dynamique suffisante.

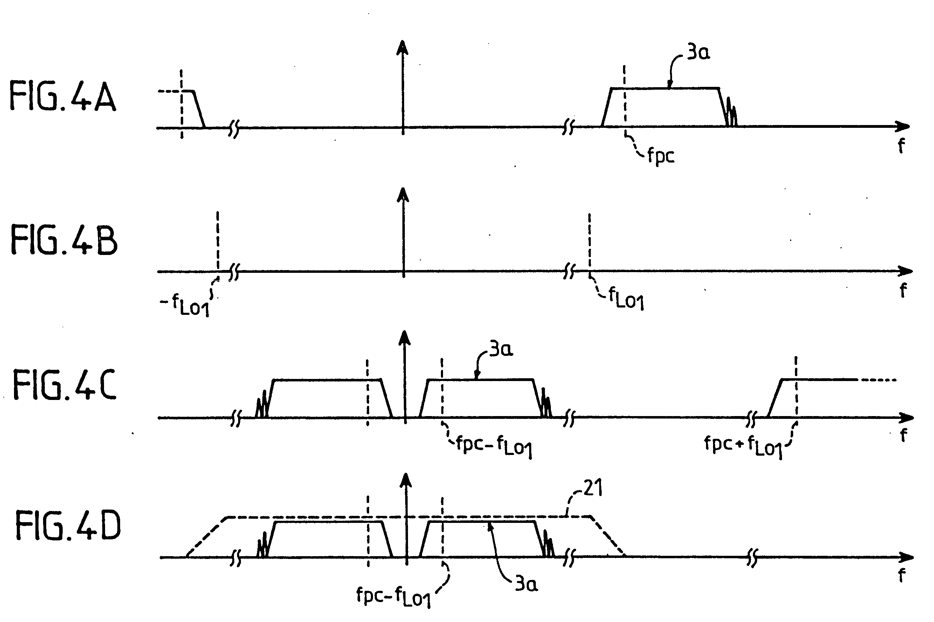

Le signal sortant 3a du filtre 13, schématiquement représenté sur la figure 4A, est envoyé sur l'entrée d'un circuit convertisseur 17, pour abaisser la fréquence. Ce circuit convertisseur 17 comprend un multiplieur 18 dont une entrée est reliée à la sortie du filtre 13 et dont une autre entrée est attaquée par le signal de sortie d'un oscillateur 19 à fréquence locale f_{Lo1}. La fréquence f_{Lo1} de cet oscillateur 19, illustrée sur la figure 4B, est constante, de préférence réglable en fonction du standard du canal TV choisi.

Il est à noter que sur les figures 4A - 4D, on a tracé des signaux dans la partie gauche des figures correspondant à des fréquences positives, et des signaux symétriques par rapport à l'axe des ordonnées pour des fréquences négatives dans une représentation mathématique des signaux.

Le signal sortant du circuit 17, à fréquence abaissée (fpc - f_{Lo1}) comme illustré sur la figure 4C, est envoyé sur l'entrée d'un filtre passe-bas 20 dont la bande passante 21 est schématisée en tirets sur la figure 4D. Après traversée de ce filtre passe-bas toutes les composantes de signaux RF (radiofréquence) ont disparu . Le signal de sortie du filtre 20, après traversée d'un circuit 22 à commande automatique du gain, arrive sur l'entrée d'un convertisseur 23 analogique/numérique A/D. Du fait de l'abaissement de la fréquence du signal envoyé sur l'entrée de ce convertisseur 23, la numérisation du signal analogique peut s'effectuer dans de bonnes conditions, à une fréquence d'échantillonnage acceptable, et avec une bonne résolution dynamique, quel que soit le standard TV.

La fréquence du signal d'entrée du convertisseur 23 étant relativement basse, la fréquence d'échantillonnage peut être supérieure au double de la fréquence maximale du signal d'entrée, ce qui est favorable à une bonne résolution .

L'invention offre un domaine étendu dans le choix de la fréquence d'échantillonnage et de la fréquence de l'oscillateur local 19.

Dans la description qui précède, on a considéré surtout le signal video. Toutefois, une architecture parallèle, après la sélection du signal FI, est possible pour la démodulation du son.

## Revendications

1. Procédé pour numériser un signal de fréquence intermédiaire FI ayant une largeur de bande (L) qui peut varier d'un standard à l'autre, alors qu'une des limites (6) de cette bande est sensiblement constante en fréquence, caractérisé par le fait qu'avant de convertir le signal analogique en signal numérique, on élimine les signaux des canaux adjacents (Sif N + 1, SifN-1 ) à la bande (3) du signal à traiter selon les étapes suivantes:
- dans une première étape, on élimine par filtrage les signaux (SifN+1) des canaux adjacents à la limite(6) sensiblement constante les caractéristiques du filtrage étant telles que, quelle que soit la largeur (L) de la bande (3) du signal à traiter en fonction du standard, ce signal ne soit pas altéré par le filtrage du côté de sa limite variable en fréquence (5) ;
- dans une seconde étape, on transpose en fréquence le signal à traiter, en fonction de sa largeur de bande, pour amener, dans le signal transposé, la limite variable (5) de la bande (3) du signal d'origine à une valeur (5a) sensiblement constante en fréquence,
- et dans une troisième étape, on élimine par filtrage les signaux (9a) des canaux adjacents au signal transposé (3a), les caractéristiques du filtrage étant telles que, quelle que soit la largeur de la bande du signal à traiter, celui-ci ne soit pas altéré.

2. Procédé selon la revendication 1 pour un signal FI dont la limite supérieure(6) de la bande est sensiblement constante en fréquence caractérisé par le fait que dans la première étape , on élimine les signaux (SifN+1) des canaux adjacents supérieurs au signal considéré (SifN), le filtrage lors de cette première étape étant adapté à la bande (L) de largeur maximale pour le signal considéré, dans les différents standards possibles TV.

3. Procédé selon la revendication 1 ou 2, caractérisé par le fait que, pour réaliser ensuite la conversion en numérique du signal, on effectue, après les trois étapes mentionnées précédemment, une réduction de la fréquence du signal à traiter, avant son envoi sur l'entrée d'un convertisseur A/D.

4. Circuit pour la numérisation d'un signal de fréquence intermédiaire FI ayant une entrée pour recevoir ce signal caractérisé par le fait qu'il comprend :
- un premier filtre passe-bande (7) dont une limite (8) correspond en fréquence à une limite sensiblement constante (6) de la bande (3) du signal à traiter pour éliminer les signaux (SifN + 1) des canaux adjacents à cette limite (6) du signal souhaité, ce filtre (7) étant adapté à la largeur (L) maximale de bande des différents standards, de manière à ne pas altérer le signal à traiter quel que soit le standard ;
- un circuit mélangeur (10) pour transposer le signal FI filtré dans une autre gamme de fréquences, en tenant compte du standard de ce signal et de sa largeur de bande, et pour amener, dans le signal transposé, la limite variable (5) du signal initial sur une valeur de fréquence sensiblement constante(5a),
- et un deuxième filtre passe-bande (13) dont une limite (15) correspond, en fréquence, à la valeur de fréquence sensiblement constante (5a) du signal transposé, ce deuxième filtre (13) étant adapté pour éliminer les signaux (9a) des canaux adjacents à la susdite valeur de fréquence constante du signal transposé, la largeur de la bande du filtre étant adaptée à la largeur maximale des différents standards possibles.

5. Circuit selon la revendication 4 caractérisé par le fait que les deux filtres (7, 13) sont constitués par des filtres SAW ( filtres à ondes de surface).

6. Circuit selon la revendication 4 ou 5 caractérisé par le fait que la largeur (K) de la bande passante des filtres (7, 13) est au moins égale à la largeur(L) maximale de la bande (3) des signaux FI des différents standards.

7. Circuit selon l'une des revendications 4 à 6 caractérisé par le fait que le circuit mélangeur (10) comprend un circuit multiplieur (II 1) dont une entrée est reliée à la sortie du premier filtre (7) et dont une autre entrée est reliée à la sortie d'un oscillateur local(12) à fréquence fixe, réglable en fonction du standard TV ou autre.

8. Circuit selon la revendication 7 caractérisé par le fait que le réglage de la fréquence fixe de l'oscillateur local (12) est fournie par une tension électrique (U).

9. Circuit selon l'une des revendications 4 à 8 caractérisé par le fait qu'un circuit réducteur de fréquence (17) est prévu à une sortie du deuxième filtre (13), ce circuit réducteur (17) comprenant un multiplieur (18) dont une entrée est reliée à la sortie du deuxième filtre (13) et un oscillateur local (19) dont la sortie est reliée à une autre entrée du multiplieur (II 8).

10. Circuit selon la revendication 9 caractérisé par le fait qu'un filtre passe-bas (20) et un circuit de commande automatique de gain (22) sont entreposés entre la sortie du réducteur de fréquence (II 7) et l'entrée d'un convertisseur A/D (23).

## Claims

1. Process for digitizing an intermediate frequency signal IF having a bandwidth (L) which can vary from one standard to the other, while one of the limits (6) of this band is substantially constant in frequency, characterized in that before converting the analogue signal into a digital signal, there is elimination of the signals of the channels (S_{if}N+1, S_{if}N-1) adjacent to the band (3) of the signal to be processed according to the following steps:
- in a first step, there is elimination by filtering of the signals (S_{if}N+1) of the channels adjacent to the substantially constant limit (6) the characteristics of the filtering being such that, regardless of the width (L) of the band (3) of the signal to be processed as a function of the standard, this signal is not impaired by the filtering on its frequency-variable limit (5) side;
- in a second step, there is frequency transposition of the signal to be processed, as a function of its bandwidth, so as to bring, in the transposed signal, the variable limit (5) of the band (3) of the original signal to a value (5a) which is substantially constant in frequency,
- and in a third step, there is elimination by filtering of the signals (9a) of the channels adjacent to the transposed signal (3a), the characteristics of the filtering being such that, regardless of the width of the band of the signal to be processed, the latter is not impaired.

2. Process according to Claim 1 for an IF signal the upper limit (6) of whose band is substantially constant in frequency characterized in that in the first step, there is elimination of the signals (S_{if}N+1) of the adjacent channels which are greater than the signal concerned (S_{if}N), the filtering during this first step being matched to the band (L) of maximum width for the signal concerned, in the various possible TV standards.

3. Process according to Claim 1 or 2, characterized in that, to subsequently carry out the conversion of the signal into digital, there is performed, after the abovementioned three steps, a reduction of the frequency of the signal to be processed, before sending it to the input of an A/D converter.

4. Circuit for the digitization of an intermediate frequency signal IF having an input for receiving this signal characterized in that it comprises:
- a first band-pass filter (7), one limit (8) of which corresponds in frequency to a substantially constant limit (6) of the band (3) of the signal to be processed so as to eliminate the signals (S_{if}N+1) of the channels adjacent to this limit (6) of the desired signal, this filter (7) being matched to the maximum bandwidth (L) of the various standards, in such a way as not to impair the signal to be processed regardless of the standard;
- a mixer circuit (10) for transposing the filtered IF signal into another frequency range, while taking account of the standard of this signal and of its bandwidth, and so as to bring, in the transposed signal, the variable limit (5) of the initial signal to a substantially constant frequency value (5a),
- and a second band-pass filter (13), one limit (15) of which corresponds, in frequency, to the substantially constant frequency value (5a) of the transposed signal, this second filter (13) being matched so as to eliminate the signals (9a) of the channels adjacent to the aforesaid constant frequency value of the transposed signal, the width of the band of the filter being matched to the maximum width of the various possible standards.

5. Circuit according to claim 4, characterized in that the two filters (7, 13) consist of SAW filters (surface wave filters).

6. Circuit according to claim 4 or 5, characterized in that the width (K) of the pass band of the filters (7, 13) is at least equal to the maximum width (L) of the band (3) of the IF signals of the various standards.

7. Circuit according to one of claims 4 to 6, characterized in that the mixer circuit (10) comprises a multiplier circuit (II 1), one input of which is linked to the output of the first filter (7) and another input of which is linked to the output of a local oscillator (12) with fixed frequency, adjustable as a function of the TV standard or the like.

8. Circuit according to claim 7, characterized in that the adjustment of the fixed frequency of the local oscillator (12) is provided by an electric voltage (U).

9. Circuit according to one of claims 4 to 8, characterized in that a frequency reducer circuit (17) is provided at an output of the second filter (13), this reducer circuit (17) comprising a multiplier (18), one input of which is linked to the output of the second filter (13) and a local oscillator (19) whose output is linked to another input of the multiplier (II 8).

10. Circuit according to claim 9, characterized in that a low-pass filter (20) and an automatic gain control circuit (22) are interposed between the output of the frequency reducer (II 7) and the input of an A/D converter (23).

## Patentansprüche

1. Verfahren zur Digitalisierung eines Signals mit der Zwischenfrequenz ZF mit einer Bandbreite (L), die sich von einer Norm zu einer anderen ändern kann, wobei eine der Bandgrenzen (6) im wesentlichen in der Frequenz konstant ist,
dadurch gekennzeichnet, daß vor der Umsetzung des analogen Signals in ein digitales Signal die Signale der Nachbarkanäle (Sif N+1, SifN-1) zu dem Band (3) des zu verarbeitenden Signals nach den folgenden Schritten eliminiert werden:
- in einem ersten Schritt werden die Signale (SifN+1) der Nachbarkanäle zu der im wesentlichen konstanten Grenze (6) eliminiert, wobei die Kennwerte der Filterung derart gewählt sind, daß unabhängig von der von der Norm abhängigen Bandbreite (L) des zu verarbeitenden Signals dieses Signal an der Seite seiner variablen Frequenzgrenze (5) durch die Filterung nicht geändert wird,
- in einem zweiten Schritt wird das zu verarbeitende Signal in Abhängigkeit von seiner Bandbreite in der Frequenz umgesetzt, um in dem umgesetzten Signal die variable Bandgrenze (5) des ursprünglichen Signals auf einen Wert (5a) mit im wesentlichen konstanter Frequenz zu bringen,
- und in einem dritten Schritt werden die Signale (9a) der Nachbarkanäle zu dem umgesetzten Signal (3a) durch Filterung eliminiert, wobei die Kennwerte der Filterung derart gewählt sind, daß unabhängig von der Bandbreite des zu verarbeitenden Signals dieses Signal nicht geändert wird.

2. Verfahren nach Anspruch 1 für ein ZF-Signal, dessen obere Bandgrenze (6) im wesentlichen in der Frequenz konstant ist, dadurch gekennzeichnet, daß in dem ersten Schritt die Signale (SifN+1) der Nachbarkanäle oberhalb des betrachteten Signals (SifN) eliminiert werden und daß bei den verschiedenen möglichen Fernsehnormen die Filterung bei diesem ersten Schritt an die maximale Bandbreite für das betrachtete Signal angepaßt wird.

3. Verfahren nach Anspruch 1 oder 2,
dadurch gekennzeichnet, daß zur folgenden Durchführung der Umsetzung in ein digitales Signal nach den drei vorangehend erwähnten Schritten eine Verringerung der Frequenz des zu verarbeitenden Signals erfolgt, bevor dieses dem Eingang eines A/D-Konverters zugeführt wird.

4. Schaltung zur Digitalisierung eines Signals mit der Zwischenfrequenz ZF mit einem Eingang zum Empfangen des Signals,
gekennzeichnet durch folgende Merkmale:
- ein erstes Bandpaßfilter (7), dessen eine Bandgrenze (8) in der Frequenz einer im wesentlichen konstanten Grenze (6) des Bandes (3) des zu verarbeitenden Signals entspricht, um die Signale (SifN+1) der Nachbarkanäle zu dieser Grenze (6) des gewünschten Signals zu eliminieren, wobei das Filter (7) derart an die maximale Bandbreite (L) der verschiedenen Normen angepaßt ist, daß das zu verarbeitende Signal unabhängig von der Norm nicht geändert wird,
- eine Mischerschaltung (10) zur Umsetzung des gefilterten ZF-Signals in einen anderen Frequenzbereich unter Berücksichtigung der Norm dieses Signals und seiner Bandbreite, und um in dem umgesetzten Signal die variable Grenze (5) des ursprünglichen Signals auf einen im wesentlichen konstanten Frequenzwert (5a) zu bringen,
- und ein zweites Bandpaßfilter (13), dessen eine Grenze (15) dem Wert der im wesentlichen konstanten Frequenz (5a) des umgesetzten Signals entspricht, wobei das zweite Filter (13) dafür vorgesehen ist, Signale (9a) von Nachbarkanälen zu diesem konstanten Frequenzwert des umgesetzten Signals zu eliminieren, und die Bandbreite des Filters an die größte Bandbreite der verschiedenen möglichen Normen angepaßt ist.

5. Schaltung nach Anspruch 4, dadurch gekennzeichnet, daß die beiden Filter (7, 13) durch Oberflächenwellenfilter SAW gebildet sind.

6. Schaltung nach Anspruch 4 oder 5, dadurch gekennzeichnet, daß die Durchlaßbandbreite (K) der Filter (7, 13) wenigstens gleich der größten Breite (L) des Bandes (3) der ZF-Signale der verschiedenen Normen ist.

7. Schaltung nach einem der Ansprüche 4 bis 6, dadurch gekennzeichnet, daß die Mischerschaltung (10) eine Multiplizierschaltung (11) enthält, deren einer Eingang mit dem Ausgang des ersten Filters (7) und deren anderer Eingang mit dem Ausgang eines lokalen Oszillators (12) mit konstanter Frequenz verbunden ist, die in Abhängigkeit von der jeweiligen Fernsehnorm steuerbar ist.

8. Schaltung nach Anspruch 7, dadurch gekennzeichnet, daß die Steuerung der konstanten Frequenz des lokalen Oszillators (12) durch eine elektrische Spannung (U) erfolgt.

9. Schaltung nach einem der Ansprüche 4 bis 8, dadurch gekennzeichnet, daß eine Schaltung (17) zur Frequenzverringerung an einem Ausgang des zweiten Filters (13) vorgesehen ist, daß die Verringerungsschaltung (17) einen Multiplizierer (18) enthält, dessen einer Eingang mit dem Ausgang des zweiten Filters (13) und einem lokalen Oszillator (19) verbunden ist, dessen Ausgang mit einem anderen Eingang des Multiplizierers (18) verbunden ist.

10. Schaltung nach Anspruch 9, dadurch gekennzeichnet, daß ein Tiefpaßfilter (20) und eine Schaltung (22) zur automatischen Verstärkungsregelung zwischen dem Ausgang des Frequenzverringerers (17) und dem Eingang eines A/D-Konverters (23) vorgesehen sind.
